# EUROPEAN PATENT APPLICATION

(11) **EP 1 604 796 A1**
(43) Date of publication of application: **14.12.2005**
(21) Application number: 05075893.7
(22) Date of filing: 15.04.2005
(51) Int. Cl.: B29C 39/36, C11D 17/00, B29C 33/50

(54) **Process for the manufacture of a cleaning tablet or part thereof**

(30) Priority: 11.05.2004 EP 04076395
(71) Applicant: UNILEVER N.V., 3013 AL Rotterdam (NL); UNILEVER PLC, London EC4P 4BQ (GB)
(72) Inventor: Cole, Andrew John, 3133 AT Vlaardingen (NL); Van Doorn, Daniel Albert, 3133 AT Vlaardingen (NL); Van der Kraan, Marcel, 3133 AT Vlaardingen (NL); Stuut, Peter Iwan, 3133 AT Vlaardingen (NL)
(74) Representative: Joppe, Hermina Laura Petronella

(57) **Abstract**

A process for manufacturing a cleaning tablet or part thereof (5) comprises introducing a settable composition into a mould (1) which comprises a peripheral wall (7) and a diaphragm (11). The composition is allowed or caused to at least partially set. The tablet or tablet part (5) is then ejected by flexing the diaphragm (11).

## Description

### Field of the Invention

The present invention relates to a process for manufacturing a cleaning tablet such as a laundry wash tablet, or part thereof, the tablet or tablet part being of the kind which is formed by moulding.

### Background of the Invention

Tablets of a cleaning composition are generally made by compressing or compacting a quantity of the composition in particulate form.

Tablets comprising two or more separate regions have also been described. For example WO 01/42416 describes the production of multi-phase moulded bodies comprising a combination of core moulded bodies and a particulate premix. WO 00/61717 describes a detergent tablet which is characterised in that at least part of its outer surface is semi-solid. WO 00/04129 describes a multi-phase detergent tablet comprising a first phase in the form of a shaped body having at least one mould therein and a second phase in the form of a particulate solid compressed within said mould. WO 99/24549 describes a detergent tablet comprising a compressed solid body and a non-compressed gelatinous portion mounted in a mold of said body. WO99/27069 relates to a tablet comprising a compressed and a non-compressed phase, wherein the non-compressed phase improves stability of perfume components.

There also have been prior publications on form stable, solid, and/or transparent smooth or gel-like detergent compositions. In GB 1578289 such a composition comprising soap, detergent and solvent has been proposed, for detergent sticks for use in wash or dry-cleaning pre-treatment. Recently it has been suggested, for example in EP 1,371,729, EP 1,405,900, EP 1,382,368, EP 1,375,636, EP 1,405,901, EP 1,405,902, EP 1,418,224 and WO 03/104380 to prepare tablets comprising a smooth or semi-solid phase.

Tablets for cleaning applications, such as laundry wash tablets, can be of single phase or multi-phase construction. Part of all of the tablet may be formed by compaction of a particulate composition. However, another class of compositions which can be used for all or part of the tablet are those which are formed by moulding. Moulding involves introduction into a suitable mould of a settable composition, the mechanism for setting normally being cooling to ambient temperature, at which the composition is solid or semi-solid. However, in principle, it is also possible to utilise settable compositions which would solidify or semi-solidify by means of another curing process such as evaporation of solvent or a chemical reaction such as a polymerisiation or polymer crosslinking reaction. In the context of the invention, setting of a settable composition refers to a composition which after insertion into a mould, reaches the solid or semi-solid state by any mechanism whatsoever.

In reality, it is difficult to carry out such a moulding process in a way in which the resulting tablet or tablet part can be quickly and efficiently removed from the mould without breaking or without leaving substantial parts of the composition still adhering to the inside of the mould.

WO-A-01/12772 discloses a continuous process for manufacture of a bar from molten cleansing agents which are simultaneously or separately poured into the mould and allowed to harden. A divider is either left in place or else removed after hardening of an adjacent body of molten cleansing agent but before pouring of the next amount of molten cleansing agent, or else it is removed while at least one phase remains flowable.

WO-A-98/51773 discloses a mould for casting shaped solid detergent articles which comprises two rigid complementary dies which upon engagement, define a cavity corresponding to a desired shape. The engaged die is a former reservoir which is open on one side to receive cast melt and on the other side, open to the cavity. This is said to be suitable for production of transparent soap tablets.

According to EP-A-493 197, a mould for casting an article such as a soap bar is coated internally with an elastic material which is resistant to the molten temperature of the melt material to be cast.

It is also known to cast a molten soap by allowing it to solidify in a shaped transparent pack or sachet.

As disclosed in JP-A-61 026699, a melt is cast into a thin moulding plate which is flexible or elastic by virtue of being made of appropriate synthetic resin material.

None of the processes described above are suitable for rapid efficient manufacture of detergent cleaning tablets all or part of which are formed by moulding, and having good physical integrity and good surface finish.

### Definition of the Invention

The present invention now provides a process for manufacturing a cleaning tablet or part thereof, the process comprising introducing a settable composition into a mould comprising a peripheral wall and a diaphragm, allowing or causing the settable composition to at least partially set and ejecting the tablet or tablet part by flexing the diaphragm.

### Detailed Description of the Invention

The peripheral wall of the mould preferably comprises a continuous or nearly-continuous body of suitable material, preferably of substantially constant cross-sectional shape and/or size. It could be substantially circular or oval in cross-section but in a preferred class of embodiments, it is substantially square or rectangular in cross-section.

The peripheral wall is preferably substantially circular, ie substantially in the form of a perfect annulus. However, it could have other shapes such as regular or irregular polygonal shapes so as to allow manufacture of tablets of more unusual or aesthetically pleasing configurations. Whatever the overall outward shape of the peripheral wall and whatever its cross-sectional size and shape, it can generally be regarded as having an upper rim and a lower rim. Preferably, the diaphragm extends across the inside of the peripheral wall at a height between the upper rim and the lower rim. In this context, "upper rim" and "lower rim" are used in the sense that the space bounded by the diaphragm and that part of the peripheral wall below the upper rim is that which receives the settable composition.

The side of the diaphragm which is not in contact with the settable composition is acted upon by ejection means such as a piston or plunger, for effective ejection of the tablet or tablet part after it has set sufficiently to a solid or semi-solid state.

To enable efficient ejection of the tablet or tablet part without undue retention, preferably at least part of the inside of the peripheral wall above the diaphragm is outwardly angled relative to a line which is orthogonal to the approximate centre of the plane of the diaphragm. In this regard, it should be noted that the diaphragm can flex so as to be concave or convex when viewed from either side (viewing either major surface) but in at least one configuration, it can adopt a substantially planar configuration. In the case of a peripheral wall which is a circular annulus or corresponding regular polygonal shape, the aforementioned line of reference can be regarded as the axis of symmetry of the mould as a whole.

Preferably the internal mould surface forming the inside of the mould (especially the innerside of the diaphragm and/or the peripheral wall which come in contact with the settable composition) has a surface which is substantially free from protrusions or indentations. Also preferably this surface is substantially free from small irregularities such as scratches or stripes. It has been found that the substantial absence of surface irregularities, indentations and protrusions leads to an efficient rejection of the tablet from the mould without undue retention.

Also preferably, the side of the diaphragm to be in contact with the settable composition is most preferably concave. The avoidance of a horizontal planar contact surface provides better demoulding.

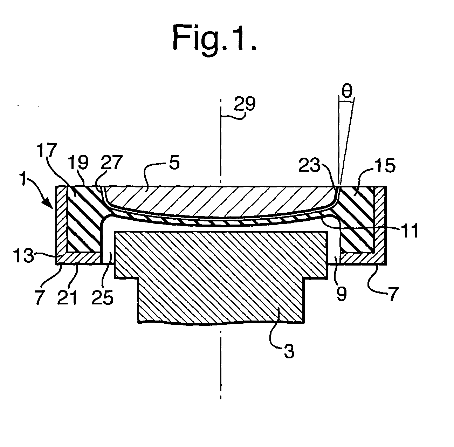

The aforementioned outward angling is preferably with an angle θ more than 4°, still more preferably more than 8°. Advantageously, it could be angled up to a maximum of 25°, more preferably 20°, still more preferably 15°. This is illustrated by way of example with a description hereinbelow of a preferred embodiment shown in Figure 1 of the accompanying drawings.

In a preferred class of embodiments, the peripheral wall comprises a support ring, preferably of rigid material, such as of a metal, eg aluminium. The inside of the peripheral wall may then be provided by an insert in the form of a peripheral support for the diaphragm and held within the support rim. Preferably, the peripheral support and diaphragm are integral.

Preferably, the diaphragm, and if integral with a peripheral support is held within a support ring. Preferably also, the peripheral support are made from a material of suitable flexibility. Preferred materials for the diaphragm and/or peripheral support are natural and synthetic rubbers, eg silicone rubbers. Preferably, this flexible material has a shore hardness of from 20 to 60, more preferably from 30 to 60. This is also beneficial for demoulding.

A mould of the kind utilised in the process according to the present invention is suitable for successive manufacture of tablets or tablet parts. Thus, after one ejection after the appropriate amount of solidification, a further amount of a settable composition is again introduced into the mould and the whole process repeated. In a mass manufacture environment, a plurality of such moulds may be employed and some or all of these may be contained in a single unitary matrix of such moulds. In that case, an array of ejection means such as pistons or plungers would be arranged underneath for ejection of the tablets so formed.

The moulded items may constitute an entire tablet. In the case of manufacture of tablet parts which form only a portion of a final tablet for sale and use, after ejection from the mould, the tablet part can then be bonded to at least another tablet part, for example another part formed by a different process from that of the invention, such as a tablet comprising a compressed particulate phase. This may for example be achieved by melt adhesion or by use of an adhesive such as a hot melt adhesive.

In a preferred class of embodiments of the present invention, at least part of the outer surface of the tablet part which was in contact with the diaphragm, is the surface which is bonded to the other tablet part.

The tablet or tablet part may for example comprise a region of a smooth or semi-solid phase and a soap rich phase or substantially only one of these. Where both are present, a composition to form the one may be introduced into the mould and then the remaining space filled by a composition for forming the other.

Suitable compositions for forming a smooth or semi-solid phase or a soap containing phase will be described in more detail hereinbelow. Also suitable formulations have for example been described in EP 1,371,729, EP 1,405,900, EP 1,382,368, EP 1,375,636, EP 1,405,901, EP 1,405,902, EP 1,418,224 and WO 03/104380.

In the case when a semi-solid phase and a soap containing phase are used in combination, preferably, it is at least part of an exposed surface of the soap containing phase which is bonded to another part of the final tablet.

### Smooth or Semi-Solid Phases

A preferred mouldable composition to form all or part of a tablet according to the present invention is one which forms a smooth or semi-solid phase. Phases with a waxy or soapy or gel-like consistency are especially suitable.

A smooth or semi-solid phase preferably contains one or more ingredients which prior to incorporation in that phase, are liquid at 25°C and 1 atmosphere pressure. This may be selected from one or more aliphatic or aromatic, polar or non-polar organic liquids (particularly organic solvents) such as liquid alkanols, diols and polyols.

Some particular suitable organic solvents are polyethyleneglycol, dipropyleneglycol, isopropanol or (mono-)propyleneglycol.

Another preferred class of organic liquids comprises liquid non-soap surfactants such as liquid nonionic surfactants, eg liquid (poly)alkoxylated aliphatic alcohols.

Preferably, the level of such organic liquids is from 0 to 40 wt%, more preferred 1 to 20, most preferred from 4 to 15 wt% based on the weight of the semi-solid phase.

A smooth or semi-solid phase preferably, however, comprises no or only low levels of water. Preferably the level of water is less than 20 wt % based on the weight of the smooth phase, more preferred less than 15 wt%, most preferred from 5 to 12 wt%. Most preferably the smooth phases are substantially free from water, which means that apart from low levels of moisture (e.g. for neutralisation or as crystal water) no additional added water is present.

For the purpose of this invention the term "smooth phase" refers to compositions which are on the one hand solid enough to retain their shape at ambient temperature and on the other hand smooth in appearance. Smooth textures are generally of low or no porosity and have -at normal viewing distance- the appearance of a continuous phase for example as opposed to porous and particulate appearance of a compacted particulate material.

Preferably the semi-solid is transparent or translucent. Preferably, this means that the composition has an optical transmissivity of at least 10%, most preferably 20%, still more preferably 30%, through a path length of 0.5 cm at 25° C. These measurements may be obtained using a Perkin Elmer UV/VIS Spectrometer Lambda 12 or a Brinkman PC801 Colorimeter at a wavelength of 520nm, using water as the 100% standard.

The transparency or translucency of a semi-solid phase does not preclude the composition being coloured, e.g. by addition of a dye, provided that it does not detract substantially from clarity.

In an advantageous embodiment of the invention, the smooth or semi-solid phase comprises from 30-100 wt% of non-soap surfactants, more preferred 40 to 90 wt% (based on the total weight of said smooth phase), more preferred from 50 to 80 wt%.

Preferably the total weight of surfactants in the semi-solid phase, especially when it is a smooth phase is from 2 to 20 grammes, more preferred from 3 to 10 grammes.

In a first preferred embodiment of the invention the tablet may be a multi-phase tablet wherein the phases other than the semi-solid phase as described above comprise no or only low levels of non-soap surfactants. Especially the level of non-soap surfactants in the compressed particulate phase is less than 10 wt%(based on the total weight of said phases), more preferred from 0 to 9 wt%, most preferred from 1 to 8 wt%.

### Soap Containing Phases

The tablet or tablet part formed by the process according to the present invention may comprise a mouldable soap containing phase.

When a soap containing phase is used in conjunction with a semi-solid phase and a compressed particulate phase as a barrier therebetween, it functions to reduce bleeding of liquid from the semi-solid phase into the compressed particulate phase. A compressed particulate phase is normally made by compacting a particulate composition, preferably including a disintegrant. However, the entire tablet may also consist of a soap containing phase.

Preferably, the level of soap surfactants is more than 50 wt%, more preferred more than 70 wt%, especially preferred from 75 wt% to 100 wt%. Preferably the level of soap rich particles in the soap rich phase is at least 60 wt%, more preferred from 80 to 100 wt%.
By "soap" is meant one or more inorganic or organic salts of one or more fatty acids, which independently may be saturated or unsaturated and optionally may be branched. Suitable soaps preferably have from 8 to 24 carbon atoms, more preferably from 10 to 20 and most preferably from 12 to 18 carbon atoms.

Further surfactants, for example anionic, nonionic or cationic surfactants may equally be present in any soap containing phase for example at a level of 0.1 to 10 wt% based on the weight of the soap rich part. However normally the first soap rich phase will be substantially free from non-soap surfactants.

In addition to the soap surfactants, any soap containing phase may also comprise other materials for example soluble materials such as electrolyte materials, meltable organic materials and sugars, at a level of 2 to 70 wt% based on the weight of the phase, more preferred from 3 to 50 wt%, most preferred 5 to 40 wt%. Examples of preferred materials are water-soluble materials such as the sodium and potassium citrates, sodium chloride, acetates and carbonates, urea and sugar. The water solubility at 20 C of these materials is preferably at least 10 grammes per 100 ml of water, more preferred more than 15 grammes, most preferably more than 20 grammes.

It has been found that these soluble materials provide good dissolution properties to the soap rich phase. Furthermore these materials do not negatively affect the desired firm consistency of a soap containing phase.

If these soluble materials are present, their particle size is preferably chosen such that the soap containing phase is a soap rich continuous matrix having dispersed therein particles of the water soluble material.

A soap containing phase is preferably a soap rich phase, wherein the level of soap is high, for example from 40 to 100 wt%, more preferred the soap level is at least 50 wt% and can even be very high say more than 80wt% or even more than 90 wt% up to 100 wt% based on the weight of the soap rich phase. Other ingredients may also be present in the soap rich phase, although preferably the soap rich layer is substantially free of non-soap surfactants, bleach ingredients and builder materials. Sometimes it may be advantageous however to incorporate into the soap rich phase, a highly soluble material such as sugars, urea, alkali metal salts such as sodium chloride etc. Typically such highly soluble materials will have a solubility of at least 100 grammes per litre water of 20 C, more preferred at least 250 grammes. Advantageously the level of these highly soluble materials in the soap rich phase is less than 50 wt%, for example from 5 to 45 wt%, advantageously from 10 to 40 wt%.

As mentioned above, a soap containing phase may function as such a barrier between a semi-solid phase and a compressed particulate phase, eg if it is able to inhibit liquid transfer to the extent that after 8 weeks storage immediately after manufacture, at 37°C and at 70% relative humidity at 1 atmosphere pressure, less than 10% by weight, more preferably less than 5% by weight of the material in the compressed solid layer consists of liquid from the semi-solid phase. Thus, after storage at such conditions, the weight of the compressed particulate phase should preferably increase by less than 10%, more preferably by less than 5%.

Although soap-containing intermediate phases are generally preferred, intermediate phases containing other barrier materials impervious to bleed, eg polymers, are also possible.

It is also useful if such a soap containing intermediate phase is harder than the semi-solid phase and less hard than the compressed particulate phase. Preferably such an intermediate phase has a weight of from 0.5 to 40 grammes, more preferred from 1 to 20 grammes, most preferred from 2 to 10 grammes. Preferably the other phases each have a weight of 2 to 40 grammes. Preferably the total weight of the cleaning tablet according to the invention is from 10 to 70 grammes.

### Compositional Aspects

Cleaning tablets made by the process of the present invention or comprising tablet parts made by such a process, may be adapted for a variety of application, such as fabrics washing, machine warewashing or hard surface cleaning. Of these, fabrics (laundry) cleaning use is one where tabletted compositions are very popular. Some typical compositional aspects of the latter kind of tablet when made by a process according to the present invention or comprising a part made by such a process, will now be described.

### Surfactant Compounds

Compositions which are used in such tablets may contain one or more detergent surfactants. In a fabric washing composition, these preferably provide from 5 to 50% by weight of the overall tablet composition, more preferably from 8 or 9% by weight of the overall composition up to 40% or 50% by weight. Surfactant may be anionic (soap or soap), cationic, zwitterionic, amphoteric, nonionic or a combination of these.

Anionic surfactant may be present in an amount from 0.5 to 50% by weight, preferably from 2% or 4% up to 30% or 40% by weight of the tablet composition.

Synthetic (i.e. non-soap) anionic surfactants are well known to those skilled in the art. Examples include alkylbenzene sulphonates, particularly sodium linear alkylbenzene sulphonates having an alkyl chain length of C₈-C₁₅; olefin sulphonates; alkane sulphonates; dialkyl sulphosuccinates; and fatty acid ester sulphonates.

Primary alkyl sulphate having the formula

ROSO₃⁻ M⁺

in which R is an alkyl or alkenyl chain of 8 to 18 carbon atoms especially 10 to 14 carbon atoms and M⁺ is a solubilising cation, is commercially significant as an anionic surfactant. Linear alkyl benzene sulphonate of the formula 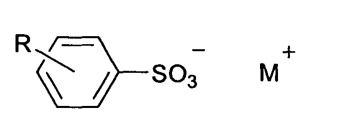 where R is linear alkyl of 8 to 15 carbon atoms and M⁺ is a solubilising cation, especially sodium, is also a commercially significant anionic surfactant.

Frequently, such linear alkyl benzene sulphonate or primary alkyl sulphate of the formula above, or a mixture thereof will be the desired anionic surfactant and may provide 75 to 100 wt% of any anionic soap surfactant in the composition.

In some forms of this invention the amount of non-soap anionic surfactant lies in a range from 5 to 20 wt% of the tablet composition.

Soaps for use in accordance to the invention are preferably sodium soaps derived from naturally occurring fatty acids, for example, the fatty acids from coconut oil, beef tallow, sunflower or hardened rapeseed oil. Especially preferably soaps are selected from C₁₀ to C₂₀ soaps for example from C₁₆ to C₁₈ or C₁₂ soaps.

Suitable nonionic surfactant compounds which may be used include in particular the reaction products of compounds having a hydrophobic group and a reactive hydrogen atom, for example, aliphatic alcohols, acids, amides or alkyl phenols with alkylene oxides, especially ethylene oxide.

Specific nonionic surfactant compounds are alkyl (C₈₋₂₂) phenol-ethylene oxide condensates, the condensation products of linear or branched aliphatic C₈₋₂₀ primary or secondary alcohols with ethylene oxide, and products made by condensation of ethylene oxide with the reaction products of propylene oxide and ethylene-diamine.

Especially preferred are the primary and secondary alcohol ethoxylates, especially the C₉₋₁₁ and C₁₂₋₁₅ primary and secondary alcohols ethoxylated with an average of from 5 to 20 moles of ethylene oxide per mole of alcohol.

In some fabric washing tablets of this invention, the amount of nonionic surfactant lies in a range from 4 to 40%, better 4 or 5 to 30% by weight of the whole tablet.

Many nonionic surfactants are liquids. These may be absorbed onto particles of the composition.

In a machine dishwashing tablet the surfactant may be wholy nonionic, in an amount below 5 wt% of the whole tablet although it is known to include some anionic surfactant and to use up to 10 wt% surfactant in total.

### Detergency Builder

Laundry tablets made in total, or in part, by a process according to the present invention will usually contain from 5 to 80%, more usually 15 to 60% by weight of detergency builder. This may be provided wholly by water soluble materials, or may be provided in large part or even entirely by water-insoluble material with water-softening properties. Water-insoluble detergency builder may be present as 5 to 80 wt%, better 5 to 60 wt% of the composition.

Alkali metal aluminosilicates are strongly favoured as environmentally acceptable water-insoluble builders for fabric washing. Alkali metal (preferably sodium) aluminosilicates may be either crystalline or amorphous or mixtures thereof, having the general formula:

0.8 - 1.5 Na₂O.Al₂O₃. 0.8 - 6 SiO₂. xH₂O

These materials contain some bound water (indicated as [xH2O]) and are required to have a calcium ion exchange capacity of at least 50 mg CaO/g. The preferred sodium aluminosilicates contain 1.5-3.5 SiO₂ units (in the formula above). Both the amorphous and the crystalline materials can be prepared readily by reaction between sodium silicate and sodium aluminate, as amply described in the literature.

Suitable crystalline sodium aluminosilicate ion-exchange detergency builders are described, for example, in GB 1429143 (Procter & Gamble). The preferred sodium aluminosilicates of this type are the well known commercially available zeolites A and X, the novel zeolite P described and claimed in EP 384070 (Unilever) and mixtures thereof.

Conceivably a water-insoluble detergency builder could be a layered sodium silicate as described in US 4664839.
NaSKS-6 is the trademark for a crystalline layered silicate marketed by Hoechst (commonly abbreviated as □SKS-6"). NaSKS-6 has the delta-Na₂SiO₅ morphology form of layered silicate. It can be prepared by methods such as described in DE-A-3,417,649 and DE-A-3,742,043. Other such layered silicates, such as those having the general formula NaMSiₓO₂ₓ₊₁.yH₂O wherein M is sodium or hydrogen, x is a number from 1.9 to 4, preferably 2, and y is a number from 0 to 20, preferably 0 can be used.

Water-soluble phosphorous-containing inorganic detergency builders, include the alkali-metal orthophosphates, metaphosphates, pyrophosphates and polyphosphates. Specific examples of inorganic phosphate builders include sodium and potassium tripolyphosphates, orthophosphates and hexametaphosphates.

Non-phosphorous water-soluble builders may be organic or inorganic. Inorganic builders that may be present include alkali metal (generally sodium) carbonate; while organic builders include polycarboxylate polymers, such as polyacrylates, acrylic/maleic copolymers, and acrylic phosphonates, monomeric polycarboxylates such as citrates, gluconates, oxydisuccinates, glycerol mono- di- and trisuccinates, carboxymethyloxysuccinates, carboxymethyloxymalonates, dipicolinates and hydroxyethyliminodiacetates.

At least one region (preferably the second region) of a fabric washing tablet preferably include polycarboxylate polymers, more especially polyacrylates and acrylic/maleic copolymers which can function as builders and also inhibit unwanted deposition onto fabric from the wash liquor.

### Bleach System

Tablets or tablet parts made by a process according to the present invention may contain a bleach system in at least one phase or region of a tablet, preferably in the second region. This preferably comprises one or more peroxy bleach compounds, for example, inorganic persalts or organic peroxyacids, which may be employed in conjunction with activators to improve bleaching action at low wash temperatures. If any peroxygen compound is present, the amount is likely to lie in a range from 10 to 25% by weight of the composition.

Preferred inorganic persalts are sodium perborate monohydrate and tetrahydrate, and sodium percarbonate, advantageously employed together with an activator. Bleach activators, also referred to as bleach precursors, have been widely disclosed in the art. Preferred examples include peracetic acid precursors, for example, tetraacetylethylene diamine (TAED), now in widespread commercial use in conjunction with sodium perborate; and perbenzoic acid precursors. The quaternary ammonium and phosphonium bleach activators disclosed in US 4751015 and US 4818426 (Lever Brothers Company) are also of interest. Another type of bleach activator which may be used, but which is not a bleach precursor, is a transition metal catalyst as disclosed in EP-A-458397, EP-A-458398 and EP-A-549272. A bleach system may also include a bleach stabiliser (heavy metal sequestrant) such as ethylenediamine tetramethylene phosphonate and diethylenetriamine pentamethylene phosphonate.

As indicated above, if a bleach is present and is a water-soluble inorganic peroxygen bleach, the amount may well be from 10% to 25% by weight of the composition.

### Other Detergent Ingredients

The tablets or tablet parts made by a process according to the present invention may also contain (preferably in the second region) one of the detergency enzymes well known in the art for their ability to degrade and aid in the removal of various soils and stains. Suitable enzymes include the various proteases, cellulases, lipases, amylases, and mixtures thereof, which are designed to remove a variety of soils and stains from fabrics. Examples of suitable proteases are Maxatase (Trade Mark), as supplied by Gist-Brocades N.V., Delft, Holland, and Alcalase (Trade Mark), and Savinase (Trade Mark), as supplied by Novo Industri A/S, Copenhagen, Denmark. Detergency enzymes are commonly employed in the form of granules or marumes, optionally with a protective coating, in amount of from about 0.1% to about 3.0% by weight of the composition; and these granules or marumes present no problems with respect to compaction to form a tablet.

The detergent tablets of the invention may also contain (preferably in the second region) a fluorescer (optical brightener), for example, Tinopal (Trade Mark) DMS or Tinopal CBS available from Ciba-Geigy AG, Basel, Switzerland. Tinopal DMS is disodium 4,4'bis-(2-morpholino-4-anilino-s-triazin-6-ylamino) stilbene disulphonate; and Tinopal CBS is disodium 2,2'-bis-(phenyl-styryl) disulphonate.
An antifoam material is advantageously included (preferably in the second region), especially if a detergent tablet is primarily intended for use in front-loading drum-type automatic washing machines. Suitable antifoam materials are usually in granular form, such as those described in EP-A-266 863. Such antifoam granules typically comprise a mixture of silicone oil, petroleum jelly, hydrophobic silica and alkyl phosphate as antifoam active material, absorbed onto a porous absorbed water-soluble carbonate-based inorganic carrier material. Antifoam granules may be present in an amount up to 5% by weight of the composition.

It may also be desirable that a detergent tablet of the invention includes an amount of an alkali metal silicate, particularly sodium ortho-, meta- or disilicate. The presence of such alkali metal silicates at levels, for example, of 0.1 to 10 wt%, may be advantageous in providing protection against the corrosion of metal parts in washing machines, besides providing some measure of building and giving processing benefits in manufacture of the particulate material which is compacted into tablets.

A tablet for fabric washing will generally not contain more than 15 wt% silicate. A tablet for machine dishwashing will often contain more than 20 wt% silicate. Preferably the silicate is present in the second region of the tablet.

Further ingredients which can optionally be employed in a region of a fabric washing detergent of the invention tablet (preferably the second region) include anti-redeposition agents such as sodium carboxymethylcellulose, straight-chain polyvinyl pyrrolidone and the cellulose ethers such as methyl cellulose and ethyl hydroxyethyl cellulose, fabric-softening agents; heavy metal sequestrants such as EDTA; perfumes; and colorants or coloured speckles.

Further ingredients which can optionally be used in tablets or tablet parts made by a process according to the invention, preferably in the second region are dispersing aids. Examples of suitable dispersing aids are water-swellable polymers (e.g. SCMC) highly soluble materials (e.g. sodium citrate, potassium carbonate or sodium acetate) or sodium tripolyphospate with preferably at least 40% of the anhydrous phase I form.

The present invention will now be explained in more detail, by way of the following description of a preferred embodiment and with reference to the accompanying drawings, in which:-

### Brief Description of the Drawings

Figure 1 shows a cross-section of a mould arrangement for effecting a process according to the present invention.

### Description of Preferred Embodiments

As shown in Figure 1, a mould arrangement for manufacturing a tablet part in accordance with the process according to the present invention comprises a mould 1, under which is situated a piston 3. Reference numeral 5 depicts a semi-solid part of a laundry cleaning tablet.

The mould 1 comprises a peripheral wall 7 which is ring shaped and bounds a space 9. The space 9 is bridged by a diaphragm 11. The peripheral wall comprises two parts. The first is an annular support ring 13 having L-shaped cross-section. The support ring 13 is made of aluminium. Received within this L-shaped support ring 13, is a silicone rubber insert 15 which comprises the diaphragm 11 and integral therewith, an annular peripheral support 17 therefor. The silicone rubber has a shore hardness in the range 40 - 55. The peripheral support is substantially rectangular, as is the whole of the peripheral wall comprising the support ring 13 and the peripheral support 17.

The space 9 within the peripheral wall 7 is divided by the diaphragm 11 which joins the peripheral support 17 at a position approximately 1/3 of the distance between the upper rim 19 and the lower rim 21 of the peripheral wall 7.

The space 9 divided by the diaphragm 11 thereby provides an upper cavity 23 above the diaphragm 11 and a lower cavity 25 below the diaphragm.

As shown in Figure 1, the diaphragm 11 is slightly bowed so as to be concave when viewed from above, into the upper cavity 23.

In use, a molten composition is poured into the upper cavity 23 and allowed to cool to ambient temperature whereupon, it adopts a semi-solid consistency to form the tablet parts. Once sufficient solidification has been achieved, the tablet part formed in this way is ejected by action of the piston 3, which sits within the lower cavity 25, being moved upwardly to distort the diaphragm 11 so that it becomes flat and/or convex when viewed from the direction of the upper cavity 23. The tablet part is thereby ejected and conveyed away. The mould can then be refilled in the same way for repeat use.

To facilitate ejection and inhibit clinging of the semi-solid composition to the mould, the side wall 27 of the upper cavity 23, which side wall is defined by an inner surface of the peripheral support 17, adjacent to the upper rim 19, is outwardly angled relative to the axis of symmetry 29 of the mould, such as to make an angle θ which is approximately 10° to the vertical.

In this embodiment, a suitable smooth, semi-solid composition for the tablet part 5 is as follows: -

### Example 1

Smooth parts were prepared of the following composition:

| *Ingredient* | *Parts by weight* |
|---|---|
| Na-LAS | 39.1 |
| Nonionic 7EO | 33.5 |
| C12 soap | 7.3 |
| Monopropyleenglycol | to 100 |

The mixture was heated to 80°C and cast into moulds and cooled to 20°C to form firm, 5 grammes smooth, semi-solid parts of 45mm diameter.

A detergent powder was made of the following composition by pregranulating the granule ingredients, followed by post-dosing the rest of the ingredients

| *Ingredient* | Parts by weight |
|---|---|
| **granules** | |
| Na-las | 1.1 |
| Nonionic 7EO | 0.5 |
| Soap (C16-C18) | 0.1 |
| Zeolite A24 | 2.4 |
| NaAc3aq | 0.3 |
| Light soda ash | 0.4 |
| SCMC (68%) | 0.1 |
| Moisture/minors | 0.4 |

| **Post-dose** | |
|---|---|
| EAG (17% silicone) | 3.0 |
| Fluorescer (15%) | 2.2 |
| STP HPA | 28.3 |
| STP LV | 34.0 |
| Na-disilicate (80%) | 3.8 |
| TAED (83%) | 4.3 |
| Percarbonate | 16.9 |
| Dequest 2047 | 1.9 |
| Minors/ enzymes/colour | to 100 |

A compacted tablet is made by pre-compressing 25 grammes of the powdered composition in a die of 45mm diameter at 4 kN/cm²

A smooth part is then applied to the top of the tablet e.g. by gentle compression.

In the light of the described embodiment, modifications of that embodiment, as well as other embodiments, all within the scope of the appended claims as interpreted in the light of the description, will now become apparent to persons skilled in the art.

### Example 2

Example 1 was repeated by replacing the detergent powder by a powder of the following composition whereby the ingredients marked with an * were pre granulated followed by post-dosing the remaining ingredients.

| **Tablet** | **Parts by weight** |
|---|---|
| Zeolite A24 * | 21 |
| Na-LAS * | 9.3 |
| Soap (C16018)* | 0.7 |
| Nonionic 7EO * | 4.1 |
| Sodium acetate trihydrate* | 2.7 |
| Sodium percarbonate (coated) | 18 |
| TAED | 8.1 |
| Sodium disilicate | 5.1 |
| Sodium qcetate 3aq | 27.0 |
| moisture | 4.0 |

## Claims

1. A process for manufacturing a cleaning tablet or part thereof (5), the process comprising introducing a settable composition into a mould (1) comprising a peripheral wall (7) and a diaphragm (11), allowing or causing the settable composition to at least partially set and ejecting the tablet or tablet part (5) by flexing the diaphragm (11).

2. A process according to claim 1, wherein the diaphragm (11) is flexed by ejection means (3) pressing upon the side of the diaphragm reverse to that in contact with the tablet or tablet part.

3. A process according to either preceding claim, wherein the peripheral wall (7) comprises an upper rim (19) and a lower rim (21), the diaphragm (11) extending across the inside of the peripheral wall at a height between the upper rim (19) and the lower rim (21), the space (23) bounded by the diaphragm and that part of the peripheral wall (7) below the upper rim being that which receives the settable composition.

4. A process according to claim 3, wherein at least part (27) of the inside of the peripheral wall (7) above the diaphragm is outwardly angled (θ) relative to a line which is orthogonal to the approximate centre of the plane of the diaphragm.

5. A process according to claim 4, wherein the outward angle (θ) is more than 4°, preferably more than 8°.

6. A process according to any preceding claim, wherein the outside of the peripheral wall (7) is provided by a support ring (13) and an inside portion of the peripheral wall is provided by an insert (15) which is held within the support ring (13) which comprises the diaphragm (11) and a peripheral support (17) therefor.

7. A process according to any preceding claim, wherein the diaphragm (11) has a hardness of from 20 to 80 shore hardness, preferably from 30 to 60 shore hardness.

8. A process according to any preceding claim, wherein the diaphragm (11) is formed of a rubber, preferably a synthetic rubber, most preferably a silicone rubber.

9. A process according to any preceding claim wherein the internal mould surface is substantially free from surface irregularities.

10. A process according to any preceding claim, wherein after ejection of the tablet or tablet part (5), a further amount of a settable composition is introduced into the mould (1).

11. A process according to any preceding claim, wherein a tablet part (5) is ejected by flexing of the diaphragm (11) and the tablet part (5) is bonded to another tablet part, preferably another tablet part formed by a different process.

12. A process according to claim 11, wherein the other tablet part comprises a compressed particulate phase.

13. A process according to any preceding claim, wherein the settable composition comprises a smooth or semi-solid phase, a soap containing phase or an amount of one of these phases is introduced and then the other is introduced on top of the said one of the phases.

14. A process according to claim 13, when dependent on any of claims 9 to 11, wherein the soap rich phase is in contact with the diaphragm (11) and the tablet part (5) is bonded to the other tablet part by at least part of a surface of the soap rich phase.

15. A process according to any preceding claim, wherein a plurality of tablets or tablet parts (11) are manufactured simultaneously in a matrix of moulds substantially identical to the said mould (1).

16. A tablet or tablet part (5) formed by a process according to any preceding claim.
